# FASCICULE DE BREVET EUROPEEN

(11) **EP 0 830 028 B1**
(45) Date de publication et mention de la délivrance du brevet: **18.12.2002**
(21) Numéro de dépôt: 97402125.5
(22) Date de dépôt: 12.09.1997
(51) Int. Cl.: H04N 7/16, H04N 7/173, H04H 9/00

(54) **Procédé et dispositif d'identification d'une chaîne de télévision, notamment pour la mesure d'audience**
Vorrichtung und Verfahren zur Identifizierung eines Fernsehkanals, besonderes für Zuschauerermittlung
Method and apparatus for identifying a television channel, especially for audience monitoring

(30) Priorité: 12.09.1996 FR 9611144
(43) Date de publication de la demande: 18.03.1998
(73) Titulaire: Mediametrie, Société Anonyme, 92300 Levallois Perret (FR)
(72) Inventeur: Laures, Antoine, 75015 Paris (FR)
(74) Mandataire: Dupuis-Latour, Dominique

(56) Documents cités:
- US-A- 4 630 108
- US-A- 5 374 951
- PATENT ABSTRACTS OF JAPAN vol. 8, no. 190 (E-263) [1627] , 31 août 1984 & JP 59 080077 A (PIONEER K.K.), 9 mai 1984,

## Description

La présente invention est relative à l'identification d'une chaîne de télévision, c'est-à-dire à la reconnaissance ou détermination, dans un foyer de téléspectateurs, de la chaîne que ce foyer voit et écoute.

L'invention trouve son application préférentielle dans la mesure d'audience, ou audimétrie. Toutefois, elle pourrait également être utilisée dans d'autres applications, par exemple pour la simple indication d'une chaîne regardée et écoutée, ou encore comme auxiliaire d'aide à la pré-programmation des touches de sélection des chaînes de télévision.

Actuellement, les procédés et dispositifs d'identification d'une chaîne sont basés sur le repérage du canal de transmission qui est reçu à un instant donné et en un lieu donné par le récepteur de télévision. Cette approche présente de graves inconvénients qui consistent en ce que, sur le plan national ou même local, il n'y a pas correspondance unique entre le numéro d'un canal et une chaîne donnée, ce qui oblige à utiliser des tables de correspondance locale établies selon le plan de fréquence ou de service du support (transmission par voie hertzienne, par câble, etc.).

L'invention a pour but de proposer une nouvelle approche. d'identification d'une chaîne de télévision, en utilisant le contenu du signal vidéo lui-même, et ce de manière simple et économique, ce qui permet la réalisation et la distribution d'un dispositif d'identification, ou audimètre, d'un fonctionnement simple et sûr et d'un prix de revient très abordable.

L'invention utilise la caractéristique du signal vidéo consistant en ce que ce signal comporte, de manière répétée dans le temps, par exemple de quatre à huit fois par seconde, une séquence de deux messages comportant un premier message d'ordre purement technique et un second message, suivant immédiatement le premier message et constituant une signature propre à la chaîne (cf. par example la Recommandation IUT-R BT. 653-3 §§ 1.1 à 2.4, ou la signature DIDON-VS16 utilisée par Télédiffusion de France sur son réseau de diffusion métropolitain des programmes SECAM-L).

Le US-A-5,374,951 a déjà proposé un dispositif d'identification d'une chaîne de télévision comprenant des moyens d'analyse d'un signal vidéo délivré en sortie d'un circuit de sélection d'un récepteur de télévision, aptes à reconnaître dans ce signal vidéo une signature propre à la chaîne.

Pour ce faire, le dispositif connu analyse le signal vidéo en recherchant les impulsions de synchronisme ligne et trame puis, une fois trouvée la référence temporelle correspondante, recherche la signature dans une fenêtre prédéterminée, dont la position est comptée à partir de cette référence.

Ce procédé d'analyse implique le recours à une électronique de synchronisation et de comptage relativement complexe.

L'un des buts de l'invention est de s'affranchir de cette électronique, par analyse du signal vidéo.

Comme on le verra, le système de l'invention, qui procède par corrélation, permet aussi de délivrer un indice de qualité (lié au taux d'erreur estimé) associé à la reconnaissance de la signature.

L'invention propose à cet effet un dispositif du type générique connu d'après le US-A-5,374,951 précité, et comprenant les moyens visés par la revendication 1.

Les sous-revendications visent des mises en oeuvre préférentielles de ce dispositif.

Ainsi, selon l'invention, on détecte ou identifie la chaîne en cours simplement en exploitant de la manière indiquée le signal vidéo lui-même, ce qui permet de s'affranchir de la difficulté ci-dessus liée à l'attribution d'un canal variable à une même chaîne ou de la recherche d'une référence temporelle et de la détermination d'une fenêtre prédéterminée par rapport à cette référence, comme cela est enseigné par le US-A-5 374 951 précité.

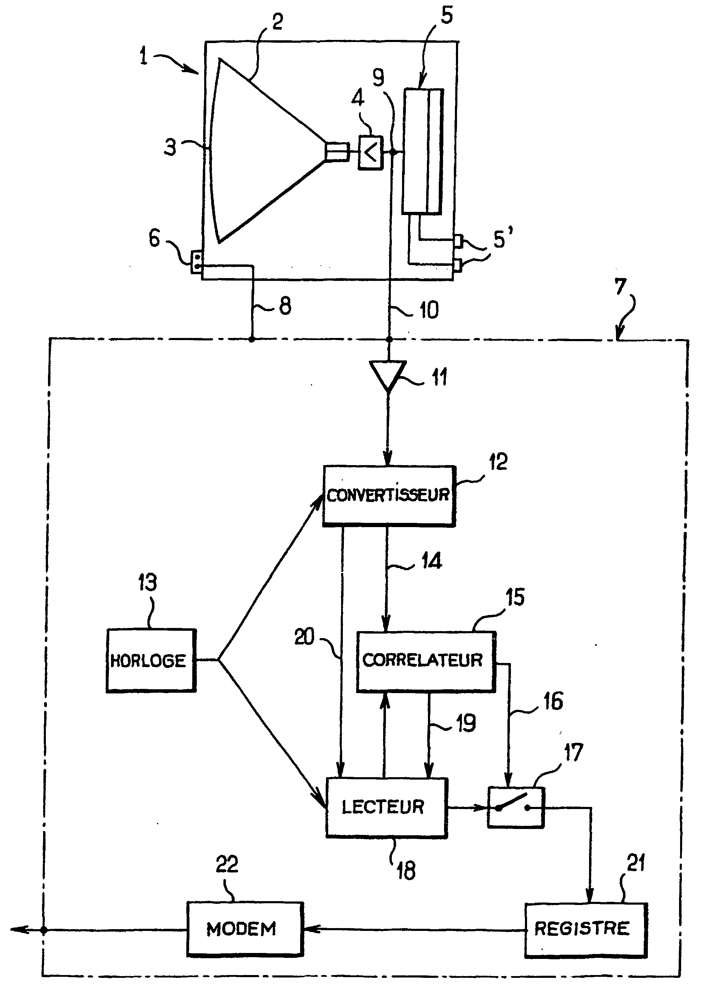

On comprendra bien l'invention à la lecture du complément de description qui va suivre et en référence au dessin annexé qui fait partie de la description et dont la figure unique est un schéma d'un dispositif établi selon un mode de réalisation préféré de l'invention dans l'application à l'audimétrie.

On a schématiquement représenté sur le dessin un récepteur de télévision 1 comportant un tube 2 de formation d'une image vidéo sur son écran 3, un amplificateur 4 situé immédiatement en amont du tube 2 pour amplifier le signal vidéo apparaissant à la sortie d'un circuit 5 de sélection de source vidéo et de traitement du signal reçu par le récepteur 1 pour le transformer en un signal vidéo, et un interrupteur marche/arrêt schématisé en 6. Le circuit 5 est raccordé à diverses entrées vidéo schématisées en 5'.

De façon connue, le signal vidéo délivré à l'amplificateur 4, puis au tube 2, comporte, outre les informations d'image, et ce de manière répétée dans le temps, par exemple quatre à huit fois par seconde, une même séquence de deux messages constitués par un premier message, ou préambule, d'ordre technique, comportant une pluralité d'octets, et un second message, ou signature, suivant immédiatement le préambule et comportant des informations, sous forme de bits en octets identifiant la chaîne de télévision correspondant à ce signal vidéo.

L'invention se propose d'identifier cette chaîne, non plus par le repérage du canal sur lequel, localement, cette chaîne est retransmise, mais par l'analyse directe de la signature ci-dessus du signal vidéo tel qu'il est délivré au tube 2 de formation d'image.

Le dispositif ou audimètre selon l'invention est schématiquement représenté en 7. Il est activé lorsque le récepteur 1 est en fonctionnement, comme schématiquement représenté par la ligne 8 de liaison avec l'interrupteur 6 du récepteur. Le signal vidéo délivré à l'amplificateur 4 du récepteur est prélevé, à l'entrée de ce dernier, par une sonde schématisée en 9 et il est acheminé à l'entrée de l'audimètre 7 par une ligne 10.

A son entrée dans l'audimètre, le signal vidéo est amplifié par un amplificateur 11 qui sert notamment à isoler entre eux les circuits du récepteur 1 et de l'audimètre 7. Cet amplificateur présente une impédance d'entrée très élevée (par exemple de 1 kΩ à 100 kΩ), un gain voisin de l'unité et une bande passante suffisante pour laisser passer les signaux sans les déformer, cette bande s'étalant par exemple de 0 MHz à 5 ou 6 MHz, ce qui laisse une bonne marge par rapport à la bande minimale théorique.

Le signal vidéo ainsi reçu et amplifié est délivré à un convertisseur 12 qui, sous la commande d'une horloge 13, réalise tout d'abord un échantillonnage du signal à la fréquence de l'horloge. De préférence, la fréquence d'échantillonnage est un multiple (par exemple deux fois ou cinq fois) de la fréquence nominale de transmission des bits de la séquence ci-dessus des deux messages, cette fréquence de transmission étant par exemple de 6,203 MHz. On utilise de préférence une fréquence d'échantillonnage qui est un multiple de la fréquence de transmission des bits afin de disposer, pour chaque bit de la séquence, d'une collection d'échantillons qui sont pris à des instants décalés dans le temps. Cette pluralité d'échantillons permet de garantir qu'il existe au moins un échantillon pris sensiblement au milieu de l'intervalle de temps des bits, ce qui permet d'évaluer la valeur d'un bit avec une faible probabilité d'erreur pour la recherche de l'instant d'échantillonnage optimum.

Le signal vidéo ainsi échantillonné est quantifié, par exemple sur deux à seize niveaux discrets, et les échantillons quantifiés sont numérisés sur un nombre de bits correspondant.

Le signal vidéo ainsi échantillonné et numérisé est délivré, comme montré en 14, à un corrélateur 15 à fonctions multiples. L'une des fonctions du corrélateur 15 est de commander, comme montré en 16, l'ouverture et la fermeture d'un interrupteur ou porte 17. Une autre fonction du corrélateur 15 est de fournir à un lecteur 18, comme montré en 19, l'instant d'échantillonnage optimum par calcul, pour chacun des instants d'échantillonnage, d'une grandeur statistique, caractéristique de la qualité de la détection de la séquence préambule-signature, ce qui permet la sélection de l'instant d'échantillonnage optimum comme étant celui qui est associé à la meilleure de la pluralité des grandeurs statistiques ainsi estimées. De préférence, on effectue une estimation de la qualité de la signature reçue en fonction de la mesure de la qualité de réception du premier message technique ou d'une partie de celui-ci.

Le lecteur 18, piloté par l'horloge 13 et commandé par le corrélateur 15, reçoit le signal numérisé provenant du convertisseur 12, comme montré en 20, et le transmet à travers l'interrupteur 17 à un registre de sortie 21. Le lecteur 18 a pour rôle de délivrer en sortie autant de bits estimés que de bits émis, à partir de la pluralité d'échantillons qui se présentent à son entrée, en ne retenant sous la commande du corrélateur 15 que ceux qui correspondent à l'instant optimal calculé par le corrélateur. Lorsque la séquence des octets correspondant à la signature a été lue, elle est délivrée au registre de sortie 21.

Le registre de sortie 21 alimente un modem 22 permettant la télécollecte journalière des informations.

Bien entendu, comme indiqué précédemment, le procédé et le dispositif selon l'invention pour l'identification d'une chaîne de télévision pourraient être utilisés dans d'autres applications, par exemple simplement pour l'indication de la chaîne regardée ou pour fournir une aide à la pré-programmation des touches de sélection des chaînes sur un récepteur de télévision.

## Revendications

1. Dispositif d'identification d'une chaîne de télévision, notamment pour la mesure d'audience,
comprenant des moyens d'analyse d'un signal vidéo délivré en sortie d'un circuit (5) de sélection d'un récepteur de télévision (1), aptes à reconnaître dans ce signal vidéo une signature propre à la chaîne, avec une sonde (9) de prélèvement du signal vidéo tel que délivré au tube, ce dispositif (7) étant **caractérisé en ce que**, le signal vidéo comportant de manière répétée dans le temps, outre les informations d'image, une séquence formée par un préambule suivi par une signature, les moyens d'analyse sont des moyens aptes à analyser la signature du signal vidéo tel que délivré au tube (2) de formation d'image du récepteur de télévision (1),
ces moyens d'analyse comprenant :
- des moyens (11, 12) d'amplification, d'échantillonnage, de quantification puis de numérisation du signal prélevé par ladite sonde (9),
- des moyens pour caler en phase une horloge d'échantillonnage sur la base d'un critère produit lors d'une phase de reconnaissance, et
- un corrélateur (15) recevant le signal ainsi numérisé, ce corrélateur étant agencé pour :
. reconnaître des bits signifiants du préambule et de la signature, et
. commander la lecture et la mémorisation de la signature dans un registre de sortie (21) lorsque lesdits bits signifiants sont reconnus.

2. Le dispositif de la revendication 1, dans lequel les moyens d'analyse comportent en outre une porte (17), commandée par le corrélateur de manière à transmettre vers le registre de sortie la séquence des octets correspondant à la signature lorsque cette séquence a été lue.

3. Le dispositif de la revendication 1, dans lequel le corrélateur (15) effectue en outre une estimation de la qualité de la signature reçue, en fonction d'une mesure de la qualité de réception du préambule ou d'une partie de celui-ci.

## Claims

1. A device for identifying a television channel, in particular for audience rating measurements,
the device comprising analysis means for analyzing a video signal output by a selector circuit (5) of a television receiver (1) and suitable for recognizing in said video signal a signature that is specific to the channel, with a probe (9) for picking up the video signal as delivered to the image-forming tube, the device (7) being charactuerized in that, for a video signal comprising in repeated manner over time, not only image information, but also a sequence comprising a preamble followed by a signature, the analysis means are means suitable for analyzing the signature of the video signal as delivered to the image-forming tube (2) of the television receiver (1), said analyzer means comprising:
· means (11, 12) for amplifying, sampling, quantifying, and then digitizing the signal picked up by said probe (9);
· means for setting the phase of a sampling clock on the basis of a criterion produced during a recognition stage; and
· a correlator (15) receiving the signal as digitized in this way, the correlator being arranged to:
· recognize meaningful bits of the preamble and of the signature; and
· cause the signature to be read and stored in an output register (21) when said meaningful bits are recognized.

2. The device of claim 1, in which the analyzer means further comprise a gate (17) controlled by the correlator to forward the sequence of bytes corresponding to the signature to the output register when said sequence has been read.

3. The device of claim 1, in which the correlator (15) also estimates the quality of the received signal, as a function of a measurement of the reception quality of the preamble or of a portion thereof.

## Patentansprüche

1. Vorrichtung zum Identifizieren eines Fernsehkanals, insbesondere für die Zuschauerermittlung,
mit Mitteln zur Analyse eines Videosignals, geliefert am Ausgang einer Wählschaltung (5) eines Fernsehempfängers (1), geeignet zum Wiedererkennen in dem Videosignal einer dem Kanal eigenen Signatur, mit einer Sonde (9) zum Abgreifen des Videosignals, wie es der Röhre geliefert wird,
wobei die Vorrichtung (7) **dadurch gekennzeichnet ist, dass** das Videosignal in wiederholter Weise in der Zeit außer den Bildinformationen eine Sequenz aufweist, welche durch einen Vorspann, gefolgt durch eine Signatur gebildet wird, wobei die Analysemittel Mittel sind, die geeignet sind zum Analysieren der Signatur des Videosignals, wie es der Röhre (2) der Bildbildung des Fernsehempfängers (1) geliefert wird,
wobei die Analysemittel aufweisen:
- Mittel (11, 12) zum Verstärken, zum Abtasten, zum Quantifizieren und dann zum Digitalisieren des durch die Sonde (9) abgegriffenen Signals,
- Mittel zum Koppeln in Phase eines Abtast-Takts auf der Basis eines Kriteriums, das produziert wird während einer Phase der Wiedererkennung, und
- einen Korrelator (15), welcher das so digitalisierte Signal empfängt, wobei der Korrelator betrieben wird zum:
. Wiedererkennen der signifikanten Bits des Vorspanns und der Signatur, und
. Anweisen des Lesens und des Speichems der Signatur in einem Ausgangsregister (21), wenn die signifikanten Bits erkannt werden.

2. Vorrichtung gemäß Anspruch 1, bei welcher die Analysemittel des Weiteren einen Port (17) aufweisen, der durch den Korrelator angewiesen wird, derart, dass er die Sequenz der Bytes, die der Signatur entsprechen, in Richtung des Ausgangsregisters überträgt, wenn die Sequenz gelesen worden ist.

3. Vorrichtung gemäß Anspruch 1, bei welcher der Korrelator (15) des Weiteren eine Schätzung der Qualität der empfangenen Signatur durchführt in Abhängigkeit eines Maßes der Empfangsqualität des Vorspanns oder eines Teils desselben.
